Europäisches Patentamt

European Patent Office

Office européen des brevets

(19)

(11) Numéro de publication : **0 552 093 A1**

## (12) DEMANDE DE BREVET EUROPEEN

(21) Numéro de dépôt : **93400061.3**

(22) Date de dépôt : **13.01.93**

(51) Int. Cl.$^5$ : **H01S 3/00,** G02F 1/00

(30) Priorité : **14.01.92 FR 9200292**

(43) Date de publication de la demande :
**21.07.93 Bulletin 93/29**

(84) Etats contractants désignés :
**DE FR GB IT NL**

(71) Demandeur : **THOMSON-CSF**
**51, Esplanade du Général de Gaulle**
**F-92800 Puteaux (FR)**

(72) Inventeur : **Defour, Martin**
**Thomson-CSF, SCPI, BP 329**
**F-92402 Courbevoie Cedex (FR)**

(74) Mandataire : **Lincot, Georges et al**
**THOMSON-CSF, SCPI, B.P. 329, 50, rue**
**Jean-Pierre Timbaud**
**F-92402 Courbevoie Cédex (FR)**

(54) **Procédé et dispositif de génération d'une émission impulsionnelle utilisant une source laser.**

(57)    Selon l'invention, chaque impulsion émise par une source laser (A) est démultipliée un nombre prédéterminée de fois.

Pour ce faire, la source laser (A) émet des impulsions polarisées linéairement selon un premier axe. A l'aide d'un retardateur (C) on applique aux impulsions un retard déterminé ; on fait ensuite tourner l'axe de polarisation d'un angle également déterminé, commandable à chaque instant à l'aide d'un rotateur de polarisation (D). En utilisant des lames séparatrices de polarisation (B, E), on émet une partie de l'énergie véhiculée par les impulsions, suivant un axe d'émission (Δ) et on réinjecte une autre partie dans le circuit précédent.

FIG.1

EP 0 552 093 A1

L'invention se rapporte au domaine des systèmes à source laser travaillant à haute cadence ; et plus particulièrement à un procédé et à dispositif de génération d'une émission impulsionnelle utilisant une source laser.

De nombreux efforts sont effectués actuellement pour obtenir des sources lasers travaillant à haute cadence. En effet, que ce soient pour les liaisons optiques entre avions, les contre-mesures optroniques, ou la détection des câbles pour hélicoptère, il est indispensable de disposer d'une source émettant à une cadence élevée, c'est à dire à typiquement plusieurs dizaines de kilohertz.

Or, dans un contexte opérationnel, ces systèmes doivent s'adapter au mieux aux contraintes suivantes :
- le système doit avoir un encombrement minimal,
- le système doit émettre avec une cadence de plusieurs dizaines de kilohertz,
- le système doit fonctionner en sécurité oculaire.

L'un des points cruciaux, en ce qui concerne la définition de la source haute cadence, réside dans l'identification de la source laser. Celle-ci doit satisfaire aux mêmes spécifications que ce qui vient d'être rappelé : encombrement minimal, émission à haute cadence et sécurité oculaire.

Le tableau 1 placé en fin de la présente description est un récapitulatif des sources lasers actuellement disponibles, ainsi que leur capacité à satisfaire ou non aux spécification citées ci-dessus. A partir de ce tableau, il est aisé de voir qu'il n'existe pas actuellement de source optique satisfaisant l'ensemble des spécifications. Si on impose par exemple la sécurité oculaire comme spécification indispensable :
- les lasers $CO_2$ ou chimiques sont à éliminer à cause de leur encombrement trop important,
- la diode laser émettant à 1,54 μm est à éliminer, car on ne dispose pas actuellement de puissance suffisante,
- le laser nd:YAG avec un oscillateur paramétrique optique que l'on appellera dans ce qui suit O.P.O ou un cellule Raman émettant à 1.54 μm est à éliminer car il n'émet ni en continu, ni à haute cadence.

L'invention vise à pallier les insuffisances de l'art connu.

Pour ce faire, on choisit une source laser émettant à moyenne cadence. A titre d'exemple non limitatif, on choisit un laser Nd:YAG + O.P.O émettant des impulsions sur la longueur d'onde 1,54 μm, à la cadence de 10 KHz. Ensuite on découpe chacune des impulsions en plusieurs impulsions que l'on sépare temporellement les unes des autres. De cette façon on augmente la cadence réelle de la source, tout en satisfaisant les autres spécifications souhaitée et sans avoir à modifier la source laser.

L'invention permet d'augmenter la cadence d'émission, mais dans certaines applications particulières le besoin est inverse. L'invention permet également de satisfaire ce besoin. Dans ce cas, les impulsions émises seront retardées et additionnées aux suivantes selon un schéma temporel déterminé.

L'invention a donc pour objet un procédé de génération d'au moins une impulsion laser suivant une direction déterminée (Δ) ; caractérisé en ce qu'il comprend au moins les étapes suivantes :
- émission d'au moins une impulsion laser polarisée linéairement suivant un premier axe de polarisation.
- introduction d'un retard déterminé ($T_0$) sur le parcourt suivi par chaque impulsion émise,
- rotation de l'axe de polarisation de chaque impulsion d'un angle commandable ($\delta_l$),
- séparation en deux de chacune des impulsions ainsi polarisée, une première impulsion polarisée suivant ledit premier axe et une seconde impulsion polarisée suivant un axe qui lui est orthogonal,
- transmission de la première impulsion suivant ladite direction déterminée (Δ).
- introduction de la seconde impulsion sur le parcourt suivi par chaque impulsion émise,

L'invention a encore pour objet un dispositif de génération d'au moins une impulsion suivant une direction déterminé (Δ) laser comprenant une source laser (A) émettant au moins une impulsion polarisée linérairement selon un premier axe de polarisation ; caractérisé en ce qu'il comprend un premier élément optique séparateur de polarisation (B) placé sur le trajet de chaque impulsion émise par le laser (A) transmettant les impulsions polarisées selon ledit premier axe à un élément optique retardateur (C) introduisant un retard prédéterminé (Δ), un élément optique rotateur de polarisation (D), couplé à la sortie de l'élément optique retardateur (C) et introduisant une rotation de l'axe de polarisation d'un angle commandable ($\delta_l$), un deuxième élément optique séparateur de polarisation (E) transmettant les impulsions polarisées selon le premier axe suivant ladite direction déterminée (Δ) et réfléchissant les impulsions polarisées suivant un axe orthogonal au premier axe vers le premier élément optique séparateur de polarisation (B), celui-ci réfléchissant ces impulsions vers l'élément optique retardateur (C).

L'invention sera mieux comprise et d'autres caractéristiques et avantages apparaîtront à l'aide de la description qui suit, en référence aux figures annexées.

La figure 1 illustre un premier exemple de dispositif selon l'invention.

La figure 2 illustre schématiquement un élément particulier par le dispositif de la figure 1.

Les figures 3 et 4 sont des chronogrammes illustrant des modes de fonctionnement du dispositif selon l'invention.

La figure 5 illustre un second exemple de réalisation d'un dispositif selon l'invention.

La figure 6 illustre une variante du dispositif de la figure 5

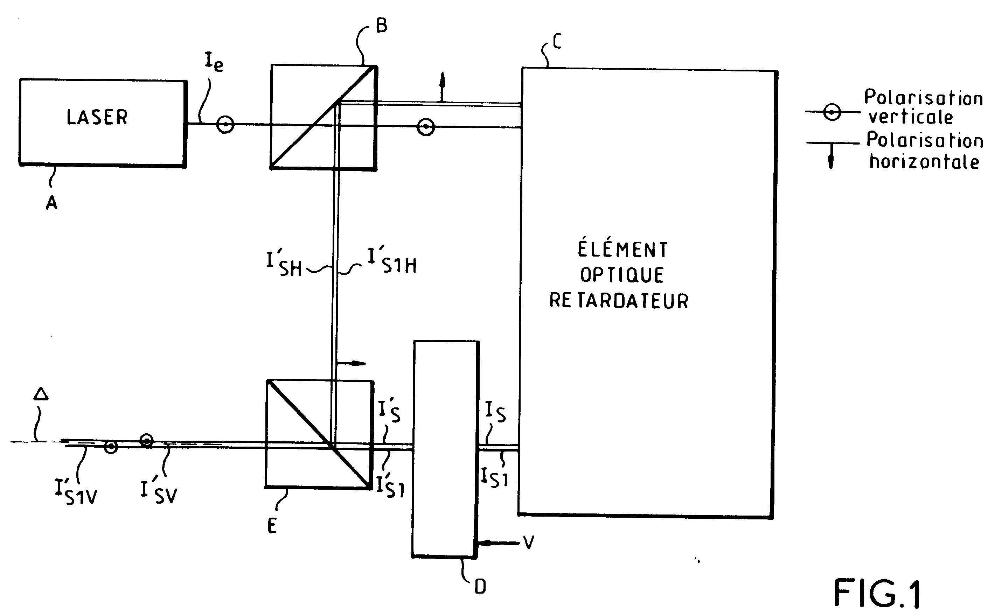

L'invention va maintenant être décrite de façon plus précise par référence au dispositif illustré par la figure 1. Sur cette figure, le dispositif est vu de haut, par convention.

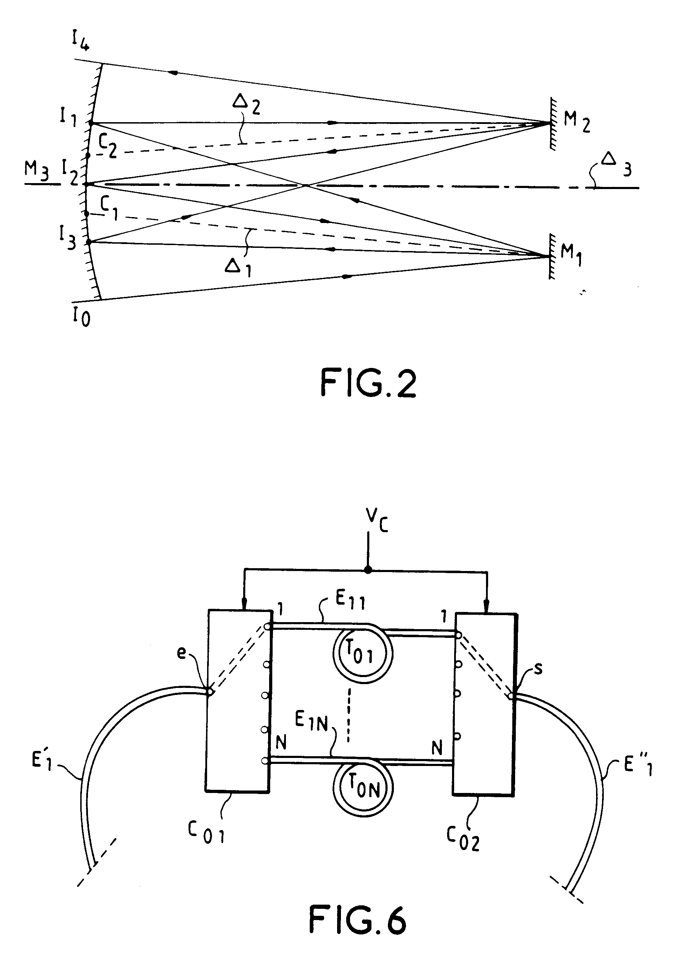

Un laser A émet à moyenne cadence (quelques kilohertz) un faisceau $I_e$ d'impulsions, d'énergie $E_n$, polarisées rectilignement (par exemple à polarisation verticale) et ayant une durée compatible avec la technologie actuelle. A titre d'exemple non limitatif, on choisit une durée de l'ordre de quelques dizaines de nanosecondes. Le faisceau traverse une lame séparatrice de polarisation B qui transmet la polarisation verticale et réfléchit la polarisation horizontale. L'impulsion initiale $I_e$ est donc transmise complètement et pénètre dans un élément optique à retard C. Il peut s'agir, par exemple, d'une cellule de White qui donne à l'impulsion incidente un retard $T_0$. La cellule C sera décrite ultérieurement en référence à la figure 2. En sortie l'impulsion $I_s$ traverse un rotateur de polarisation D. Il peut s'agir par exemple d'une cellule de Pockels commandable électriquement par un signal électrique V et qui a pour rôle de faire tourner la polarisation de

$$\left( \frac{\pi}{2} - \delta_0 \right)$$

rd. Lorsque l'impulsion de sortie $I'_s$ traverse une seconde lame séparatrice de polarisation E, elle est transmise en partie vers l'extérieur et en partie vers la lame séparatrice de polarisation B.

De façon plus précise, la lame E sépare l'onde incidente $I'_s$ en une onde à polarisation horizontale $I'_{SH}$ retransmise vers la lame B et une onde à polarisation verticale $I'_{SV}$, transmise vers l'extérieur.

Le bilan énergétique est le suivant : la partie de l'impulsion $I'_{SV}$ de polarisation verticale est transmise, vers l'extérieur du système avec une énergie $E_0 = E_n x \sin^2(\delta_0)$ et la partie, de polarisation horizontale $I'_{SH}$, est réfléchie vers la lame séparatrice de polarisation B, avec un taux d'efficacité égale à $r_0 = \cos^2(\delta_0)$. Cette impulsion atteint la lame séparatrice B et est réfléchie vers l'élément optique à retard C. En sortie de cet élément, l'impulsion $I_{S1}$ traverse le rotateur de polarisation D qui fait tourner la polarisation d'un nouvel angle $\delta_1$. En sortie l'impulsion $I_{S1}$ devient $I'_{S1}$. La lame séparatrice E transmet une partie de l'impulsion $I'_{S1}$ vers l'extérieur (impulsion $I'_{SV}$) avec une énergie $E_1 = r_0 x \sin^2(\delta_1) x E_n$ et réfléchit vers la lame B une partie $I'_{S1H}$ de polarisation horizontale, avec un taux d'efficacité de $r_1 = r_0 x \cos^2(\delta_1)$. Cette opération est effectuée autant de fois que l'on désire. Le processus se termine normalement en donnant à l'impulsion qui traverse le rotateur de polarisation D une rotation de polarisation de $\frac{\pi}{2}$ rd, l'impulsion est alors entièrement transmise vers l'extérieur, suivant un axe d'émission $\Delta$

Il est aisé de constater que l'on dispose d'une source émettant à la cadence f du laser, des trains de N impulsions séparées d'un intervalle de temps $T_0$ et d'énergie $E_i = E_n x r_i x \sin^2(\delta_i)$ avec i variant de 0 à N, $r_i = r_{(i-1)} x \cos^2(\delta_i - 1)$ et $\delta_N = \frac{\pi}{2}$ rd.

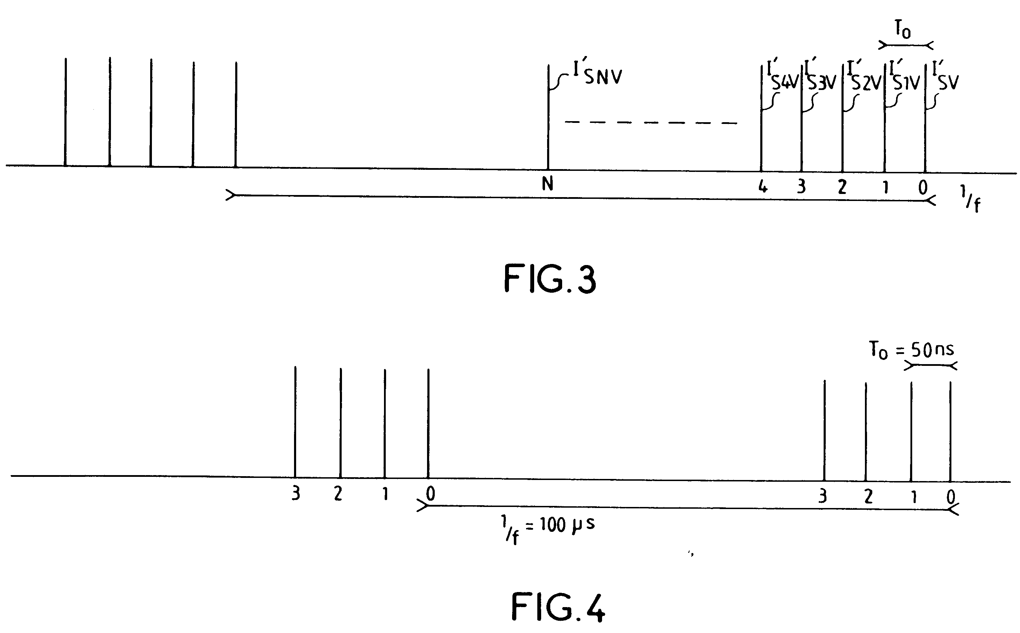

La figure 3 est un chronogramme illustrant schématiquement ce mode de fonctionnement. On retrouve les impulsions précédemment décrites, transmises vers l'extérieur $I'_{SV}$, $I'_{S1V}$ ; suivies de $I'_{S2V}$ à $I'_{SNV}$.

Pour fixer les idées, sans que cela soit limitatif, on va illustrer le fonctionnement du dispositif de la figure 1 par un exemple concret.

On choisit un laser du type nd:YAG + O.P.O, émettant à la longueur d'onde 1,54 $\mu$m, des impulsions d'énergie 1mJ, à la cadence f = 10Khz. L'impulsion laser traverse la lame B et pénètre dans une cellule de White C qui réalise un retard $T_0 = 50$ns, à la sortie une cellule de pockels fait tourner la polarisation d'un angle de

$$\left( \frac{\pi}{2} - 0.524 \right)$$

rd. Lorsque l'impulsion atteint la lame E, une impulsion de 250 $\mu$J est transmise vers l'extérieur en polarisation verticale. l'impulsion d'énergie 750 $\mu$J en polarisation horizontale est réfléchie vers la lame B. Après un nouveau retard de 50ns, le rotateur D fait tourner la polarisation d'un angle 0.615 rd. La lame E transmet vers l'extérieur une impulsion de polarisation verticale d'énergie 250 $\mu$J. L'impulsion de polarisation horizontale et d'énergie 500 $\mu$J est réfléchie vers la lame B. Après un nouveau retard de 50 ns, le rotateur D fait tourner la polarisation d'un angle 0.785 rd. La Lame E transmet vers l'extérieur une impulsion d'énergie 250 $\mu$J. L'impulsion de polarisation horizontale et d'énergie 250 $\mu$J est réfléchie vers la lame B. Après un nouveau retard de 50ns, le rotateur D fait tourner la polarisation de $\frac{\pi}{2}$ rd. La lame E transmet l'impulsion dans sa totalité soit 250µJ.

On dispose donc d'une source émettant toutes les 100 µs quatre impulsions, d'énergie 250 µJ et séparées de 50ns. La cadence réelle de la source devient donc de quatre impulsions toutes les 100 µs, soit 40 Khz. Ce mode de fonctionnement est illustré par le chronogramme de la figure 4.

Comme le suggère les figures 3 et 4, les impulsions générées transmettent toutes la même énergie. Pour cela, on a dû choisir les angles $\delta_i$ de façon appropriée. Un exemple des différentes valeurs de $\delta_i$ vient d'être fourni, compte tenu des autres paramètres influant sur l'énergie transmise. Un tel choix n'est naturellement pas toujours requis.

Mais si tel est le cas, on peut généraliser les conditions à remplir pour obtenir ce résultat.

On notera $E_0$ l'énergie de l'impulsion initiale,

$E_i^e$ l'énergie de l'impulsion i en sortie de la lame B,

$E_i^s$ l'énergie de l'impulsion en sortie de la lame E, transmise suivant l'axe $\Delta$.

Les paramètres de réflexion et de transmission associés à la lame B sont respectivement $T_1$, $R_1$.

Les paramètres de réflexion et de transmission associés à la lame E sont respectivement $T_2$, $R_2$.

Les paramètres de transmission associés, respectivement, à la cellule à retard C et le rotateur de polarisation D sont $T_r$, $T_m$.

On obtient les relations suivantes :

$$E_i^s = E_{i-1}^e \times T_r \times T_m \times T_2 \times a_i$$

et

$$E_i^e = E_{i-1}^e \times T_r \times T_m \times R_2(1 - a_i) \times R_1$$

Avec $E_0^e = E_0 \times T_1$

et $a_i = \sin^2 \delta_i$

On obtient donc :

$$E_{i+1}^s = E_i^s \times \frac{a_i + 1}{a_i} \times (1 - a_i) \times T_r \times T_m \times R_2 \times R_1$$

On veut, par hypothèse que $\forall i$

$$E_{i+1}^s = E_i^s = E_1$$

Il est donc nécessaire que :

$$\frac{1}{a_{i+1}} = T_C \times T_m \times R_2 \times R_1 \left( \frac{1}{a_i} - 1 \right)$$

ou

$$\text{ou} \quad \frac{1}{a_i} = \alpha^{i-1} \left( \frac{1}{a_1} + \frac{\alpha}{1 - \alpha} \right) - \frac{\alpha}{1 - \alpha}$$

avec

$$\alpha = T_r \times T_m \times R_1 \times R_2$$

et

$$E_1 = E_0 \times \frac{T_1 \times T_2}{R_1 \times R_2} \times \alpha \times a_1$$

Cela impose une valeur maximale pour i, c'est à dire en réalité la valeur N précitée.

$$i = N$$

Cette valeur est obtenue quand $\frac{1}{a_N} = 1$

soit

$$\frac{1}{1-\alpha} = \alpha^N \left[ \frac{E_0}{E_1} \times \frac{T_1 \times T_2}{R_1 \times R_2} + \frac{1}{1-\alpha} \right]$$

Pour fixer les idées, on suppose que l'énergie d'une impulsion émise par le laser A est $E_0 = 250 \ \mu J$.
On suppose que:

$T_1 = T_2 = R_1 = R_1 = 0,99$
$T_m = 0,8$
$T_r = (0,995)^7$

On obtient les couples de valeurs suivants :

$N = 23 \ E_1 = 0,1 \mu J$
$N = 15 \ E_1 = 1 \mu J$

Si on choisit d'autres valeurs pour $T_1$, $T_2$, $R_1$, $R_2$ et $T_m$ comme indiqués ci-dessous:

$T_1 = T_2 = R_1 = R_2 = 0,995$
$T_m = 0,9$
(Tr restant inchangé)

On obtient le couple de valeurs suivantes :

$N = 43 \qquad E_1 = 0,1 \mu J$

On va maintenant se reporter à la figure 2. Cette figure illustre schématiquement un élément à retard du type "cellule de WHITE".

Cet élément optique comporte essentiellement trois miroirs cylindriques, de même rayon de courbure, $M_1$, $M_2$, et $M_3$, dont deux , $M_1$ et $M_2$, de plus petites dimensions sont placés en vis à vis du, miroir $M_3$ et de part et d'autre de l'axe de symétrique 43 de ce miroir. La distance séparant chaque couple de miroirs est égale au rayon de courbure.

Les axes de symétrie $\Delta_1$, $\Delta_2$ des miroirs $M_1$ et $M_2$, coupent le miroir $M_3$ respectivement, aux points $C_1$ et $C_2$.

On a représenté sur la figure 2 un faisceau incident $I_0$, qui joue le rôle du faisceau émergeant de la cellule B dans le dispositif de la figure 1.

Selon la position des points $C_1$, et $C_2$ par rapport à l'axe $\Delta_3$, on peut régler le nombre de réflexions successives sur les couples de miroirs $M_1$ -$M_3$, et $M_2$-$M_3$. Sur la figure 2, le faisceau laser va subir trois réflexions $I_1$, $I_2$, et $I_3$ sur le miroir $M_3$ et deux sur chaque miroir $M_1$ et $M_2$.

On conçoit aisément qu'en fonction du nombre de réflexions successives et du rayon de courbure des miroirs, le trajet du faisceau dans la cellule de WHITE va être plus ou moins long avant que le rayon ressorte : rayon $I_4$. Le retard apporté $T_0$, dû au temps de transit, sera donc plus ou moins long et réglable. Pour ce faire, on peut agir sur les inclinaisons respectives des axes $\Delta_1$, $\Delta_2$, $\Delta_3$. Des moteurs, entraînant les miroirs $M_1$ et $M_2$, peuvent être utilisés à cet effet.

Le faisceau $I_4$ joue le rôle des faisceaux $I_S$, $I_{S1}$, etc représentés sur la figure 1.

L'intérêt d'utiliser des miroirs cylindriques, par rapport à des miroirs plans, est de conserver la qualité du faisceau entrant ; en particulier la divergence et le diamètre reste le même en sortie qu'en entrée.

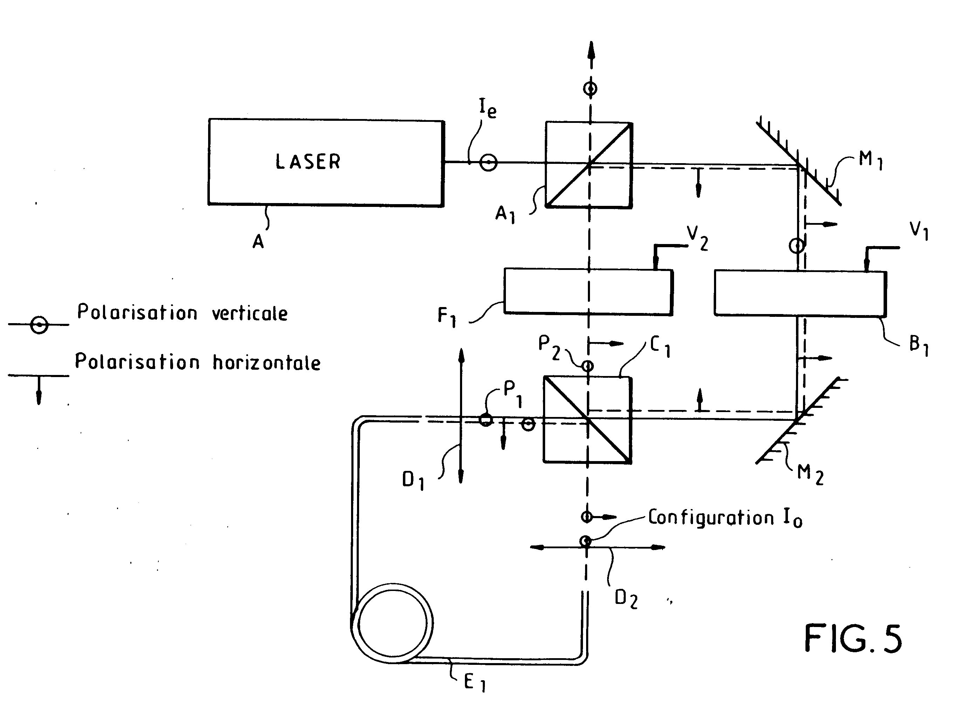

Un second exemple de réaliser d'un dispositif selon l'invention va maintenant être décrit en référence à la figure 5.

Comme dans l'exemple du dispositif de la figure 1, un laser A émet à moyenne cadence (quelques Kilohertz) des impulsions d'énergie $E_n$, polarisées rectilignement (par exemple à polarisation verticale) et ayant une durée compatible avec ce que permettent les technologies actuelles : quelques dizaines de nanosecondes. Le faisceau émis $I_e$ traverse une lame séparatrice de polarisation $A_1$ qui transmet la polarisation verticale et réfléchit la polarisation horizontale. L'impulsion initiale est donc transmise puis réfléchie par un miroir $M_1$. La direction de réflexion est orthogonal à celle du faisceau incident . Elle traverse un rotateur de polarisation $B_1$, qui fait tourner la polarisation d'un angle de $\pi/2$. L'impulsion en polarisation horizontale est réfléchit par le miroir $M_2$ suivant une direction orthogonale à la direction d'incidence et atteint une lame séparatrice de polarisation $C_1$, qui transmet la polarisation horizontale. L'impulsion est alors couplée à une fibre optique $E_1$ par l'intermédiaire d'une lentille $D_1$. Celle-ci aura deux actions, dépolariser et donner un retard $T_0$ à l'impulsion.

La fibre optique est couplée, en son autre extrémité, par l'intermédiaire d'une lentille D2 à la lame séparatrice de polarisation $C_1$.

Par convention, on dira que l'impulsion en entrée de la $C_1$, après avoir subi un retard $T_0$ et une dépolarisation par la fibre optique $E_1$, est dans une configuration $I_0$.

La lame séparatrice $C_1$ réfléchit 50 % de l'impulsion incidente de nouveau vers la lentille $D_1$, en polarisation

verticale.

On repère cette impulsion $P_1$. La lame $C_1$ transmet 50 % de l'impulsion incidente vers un rotateur de polarisation $F_1$. Il peut s'agir, par exemple, d'une cellule de pockels à commande électrique $V_2$. On repère cette impulsion P2. Le rotateur a pour rôle de faire tourner la polarisation de $\delta_1$ rd. Lorsque l'impulsion traverse la lame séparatrice de polarisation $A_1$, elle sera transmise en polarisation verticale vers l'extérieur du système avec un taux d'efficacité $t_1 = \sin^2(\delta_1)$ et réfléchie vers le miroir $M_1$, en polarisation horizontale avec taux d'efficacité égale à $r_1 = \cos^2(\delta_1)$. Cette impulsion traverse de nouveau le rotateur de polarisation $(B_1)$ sans que celui-ci ne fasse tourner la polarisation. En effet, ce dernier fonctionne à la cadence de d'émission du laser A.

Le rotateur de polarisation $B_1$ peut être, comme précédemment une cellule de Pockels à commande électrique $V_1$. Cependant, fonctionnant à la cadence de la source laser $A_1$, il est moins sollicité. On peut donc choisir des éléments moins rapides : cellule à cristaux liquides ou cellule ferroélectrique. Après réflexion sur le miroir $M_2$ et transmission par la lame $C_1$, l'impulsion atteint la lentille $D_1$. Si le trajet suivi par l'impulsion $P_2$ est faible, le retard entre $P_1$ et $P_2$ peut être négligeable. L'impulsion qui atteint la lentille $D_1$ sera donc la somme de $P_1$ avec $P_2$. En sortie de la fibre $E_1$, on retrouve une impulsion retardée de $T_0$ et dépolarisée.

L'impulsion atteint la configuration que l'on a appelé $I_0$. L'opération décrite à partir de $I_0$ peut être réitérée autant de fois que l'on désire. Après chaque opération, l'action du rotateur de polarisation $F_1$ permet la transmission vers l'extérieur d'une impulsion. On dispose alors d'une source émettant des impulsions séparées d'un temps $T_0$. Si l'on appelle $T_m$ le taux de transmission des rotateurs ($B_1$ et $F_1$), $T_c$ le taux d'efficacité de couplage à la fibre, $E_i$ l'énergie de la ième impulsion et que le taux d'efficacité des lames séparatrices vaut 1. on a :

$$E_1 = E_n \times T_m^2 \times T_c \times 0,5 \times t_1$$

$$E_{(i+1)} = E_i \times t_{(i+1)} \times T_c \times 0,5 \times \left[ \frac{1 + T_m^2 \times (1 - t_i)}{t_i} \right]$$

avec $t_1 = \sin^2(\delta_i)$

Au lieu d'utiliser une fibre optique unique $E_1$, on peut introduire un retard variable, par sauts, en utilisant plusieurs fibres optiques.

La figure 6 représente schématiquement un exemple d'un tel agencement.

La boucle que forme la fibre $E_1$ sur la figure 5 est coupée et remplacée par deux fibres $E'_1$ et $E''_1$ chacune couplée à , respectivement, l'entrée e et la sortie s de commutateurs $C_{O1}$ et $C_{O2}$.

Le premier commutateur $C_{O1}$ possède une entrée unique e et N sorties : 1 à N, et le second commutateur $C_{O2}$, N entrées : 1 à N, et une sortie unique s.

Entre ces deux commutateurs sont disposées N fibres optiques $E_{11}$ à $E_{1N}$, associées chacune à un retard différent $T_{01}$ à $T_{0N}$.

Les commutateurs $C_{O1}$ et $C_{O2}$ peuvent être de tous types, par exemple des commutateurs électrooptiques commandés, en synchronisme, par un signal de commande électrique $V_c$.

Cette architecture n'est par la seule possible . Selon une autre variante, non illustrée, on pourrait, par exemple, introduire dans la boucle $E'_1$-$E''_1$, un nombre de fibres optiques variable, disposées en cascade de façon à ce que les retards s'additionnent. La longueur de chacune de ces fibres peut être la même. Le retard total est alors égal à $N.T_0$, $T_0$ était le retard apporté par chaque fibre et N le nombre de fibres insérées.

Les longueurs individuelles des fibres peuvent être réparties suivant une loi en puissances de 2 : $2^0$, $2^1$, $2^2$ etc.... Les retards apportés sont alors fonction du nombre de fibres optiques insérées et du poids binaire de chacune de ces fibres.

L'invention n'est pas limitée aux seuls procédés et dispositifs précisément décrits ci-dessus.

Notamment, toutes combinaisons d'éléments optiques réalisant les fonctions nécessaires à l'invention : séparation de polarisation, retard et rotation de polarisation, éléments bien connus de l'homme de métier, peuvent être mises à profit sans sortir du cadre de l'invention.

L'invention s'applique très généralement à tous les systèmes nécessitant une source optique à haute cadence d'émission.

On peut cependant, par un réglage particulier du retard de l'impulsion émise par la source laser, additionner cette impulsion une ou plusieurs fois aux impulsions suivantes. Si cette opération d'addition est répétée N fois, avec N nombre entier , la fréquence de répétition f du dispositif d'émission devient (f/N).

Ce mode de fonctionnement ne nécessite pas de modifications fondamentales du dispositif selon l'invention.

Il suffit que le retard apporté par l'élément de retard soit en relation avec l'inverse de la fréquence d'émission des impulsions par la source laser. De façon plus précise, le retard $T_o$ doit être un multiple entier de l'intervalle de temps séparant deux impulsions émises par le laser A, soit

$$T_0 = N \left( \frac{1}{f} \right).$$

Si l'on se reporte à nouveau au dispositif de la figure 1, le mode de fonctionnement sera en "tout ou rien" dans le sens qu'il y a qu'une seule rotation de l'angle $\delta$, rotation égale à $\frac{\pi}{2}$.

Jusqu'à présent, on a admis implicitement que la cadence d'émission du laser A était constante. Cette limitation ne s'applique pas à l'invention. En effet, cette cadence peut être variable dans le temps. On peut également n'émettre qu'une impulsion isolée, qui sera démultipliée en un paquet de N impulsions.

Comme il a été signalé, l'invention s'applique notamment au domaine des transmissions par voie optique. Selon une caractéristique supplémentaire de l'invention, on peut moduler les impulsions émises.

Selon un premier mode, on peut moduler les impulsions en amplitude. Par exemple, on code chaque impulsion sur deux bits. Il suffit que, contrairement à la variante présentée en relation avec les chronogrammes des figures 3 et 4, l'énergie véhiculée par les impulsions ne soit plus constante dans le temps. En jouant sur l'angle de rotation de polarisation $\delta_i$, on peut obtenir cet effet et définir deux niveaux. Si l'on choisit N=10, on peut donc transmettre 20 bits d'information par train émis.

Un autre mode consiste à détecter la position temporelle des impulsions. Un décalage de position peut être obtenu en jouant sur le retard. Ce type de modulation est connu sous le terme anglo-saxon de "Pulse Position Modulation" ou "PPM".

| Spécifications | Longueur d'onde | A | B | C |
|---|---|---|---|---|
| Laser CO2 | 10,6 $\mu$m | non | oui | oui |
| Diode laser | 0,8 $\mu$m | oui | oui | non |
| Diode laser | 1,54 $\mu$m | oui | non | oui |
| Laser Nd:YAG + O.P.O ou une cellule Raman | 1,54 $\mu$m | oui | non | oui |
| Laser Nd:YAG | 1,064 $\mu$m | oui | oui | non |
| Laser chimique | 3,8 $\mu$m | non | oui | oui |

A : Encombrement faible

B : Puissance crête de quelques watts en mode continu ou impulsions haute cadende

C : Fonctionnement en sécurité oculaire

## TABLEAU 1

## Revendications

1. Procédé de génération d'au moins une impulsion laser suivant une direction déterminée ($\Delta$) ; caractérisé en ce qu'il comprend au moins les étapes suivantes :
   - émission d'au moins une impulsion laser polarisée linéairement suivant un premier axe de polarisation.
   - introduction d'un retard déterminé ($T_0$) sur le parcourt suivi par chaque impulsion émise,
   - rotation de l'axe de polarisation de chaque impulsion d'un angle commandable ($\delta_i$),
   - séparation en deux de chacune des impulsions ainsi polarisée, une première impulsion polarisée suivant ledit premier axe et une seconde impulsion polarisée suivant un axe qui lui est orthogonal
   - transmission de la première impulsion suivant ladite direction déterminée ($\Delta$).
   - introduction de la seconde impulsion sur le parcourt suivi par chaque impulsion émise.

2. Procédé selon la revendication 1, caractérisé en ce que lesdites étapes sont répétées cycliquement un nombre de fois (N) prédéterminé, ce nombre étant un nombre entier plus grand que l'unité

3. Procédé suivant les revendications 1 ou 2, caractérisé en ce que ladite émission est un train d'impulsions laser à une cadence déterminée et en ce que le retard ($T_0$) est choisi inférieur à l'intervalle de temps (1/f) séparant deux impulsions successives dudit train de manière à augmenter la cadence d'émission.

8

4. Procédé suivant la revendication , caractérisé en ce que ladite émission est un train d'impulsion laser à une cadence déterminée et en ce que le retard ($T_0$) est choisi égal à un nombre entier de fois l'intervalle de temps (1/f) séparant deux impulsion dudit train.

5. Procédé suivant l'une quelconque des revendications 1 à 3 ; caractérisé en ce que lesdits angles commandables ($\delta_l$) sont choisis de telle manière que les impulsions successives ($I'_{sv}$ à $I'_{sNv}$) suivant ladite direction déterminée ($\Delta$) présentent toutes le même niveau d'énergie.

6. Procédé suivant l'une quelconque des revendications 1 à 3 caractérisé en ce que lesdits angles commandables ($\delta_l$) sont choisis de manière à moduler en amplitude les impulsions transmises suivant ladite direction déterminée ($\Delta$).

7. Procédé suivant l'une quelconque des revendications 1 à 3, caractérisé, en ce que ledit retard déterminé ($T_0$) est modifiable de manière à moduler en position les impulsions émises suivant ladite direction déterminée ($\Delta$).

8. Dispositif de génération d'au moins une impulsion laser suivant une direction déterminé ($\Delta$) comprenant une source laser (A) émettant au moins une impulsion polarisée linéairement selon un premier axe de polarisation ; caractérisé en ce qu'il comprend un premier élément optique séparateur de polarisation (B) placé sur le trajet de chaque impulsion émise par le laser (A) transmettant les impulsions polarisées selon ledit premier axe à un élément optique retardateur (C) introduisant un retard prédéterminé ($T_0$), un élément optique rotateur de polarisation (D), couplé à la sortie de l'élément optique retardateur (C) et introduisant une rotation de l'axe de polarisation d'un angle commandable ($\delta_l$), un deuxième élément optique séparateur de polarisation (E) transmettant les impulsions polarisées selon le premier axe suivant ladite direction déterminée ($\Delta$) et réfléchissant les impulsions polarisées suivant un axe orthogonal au premier axe vers le premier élément optique séparateur de polarisation (B), celui-ci réfléchissant ces impulsions vers l'élément optique retardateur (C).

9. Dispositif selon la revendication 8, caractérisé en ce que l'élément optique retardateur (C) est une cellule de WHITE.

10. Dispositif selon la revendication 9 ; caractérisé en ce que l'élément optique rotateur de polarisation (D) est une cellule de POCKELS à signal de commande électrique (V), dont l'amplitude du signal de commande (V) déterminé l'amplitude dudit angle de rotation ($\delta_l$).

11. Dispositif de génération d'au moins une impulsion suivant une direction déterminée ($\Delta$) laser comprenant une source laser (A) émettant au moins une impulsion polarisée linéairement selon un premier axe de polarisation ; caractérisé en ce qu'il comprend un premier élément optique séparateur de polarisation ($A_1$) placé sur le trajet de chaque impulsion émise par le laser (A), transmettant des impulsions polarisés selon ledit premier axe à un premier élément optique rotateur de polarisation ($B_1$), cet élément introduisant une rotation égale à un angle fixe sur chaque impulsion émise par la source laser (A), un deuxième élément optique séparateur de polarisation ($C_1$) transmettant les impulsions polarisées selon un axe orthogonal audit premier axe vers un élément optique retardateur ($E_1$), introduisant un retard déterminé ($T_0$) et dépolarisant des impulsions reçues, le deuxième élément optique séparateur de polarisation ($C_1$) étant couplé à la sortie de l'élément optique retardateur ($E_1$), transmettant les impulsions polarisées selon un axe orthogonal audit premier axe vers un second élément optique rotateur de polarisation ($F_1$), cet élément introduisant une rotation de l'axe de polarisation d'un angle commandable ($\delta_l$) et en ce que la sortie de cet élément est couplée au premier élément optique séparateur de polarisation ($A_1$) qui transmet suivant ladite direction déterminée ($\Delta$) les impulsions polarisées selon le premier axe et réfléchit vers le premier élément optique rotateur de polarisation ($B_1$) les impulsions polarisées selon un axe orthogonal au premier axe.

12. Dispositif selon la revendication 11, caractérisé en ce que ledit angle fixe est égal à $\frac{\pi}{2}$rd.

13. Dispositif selon les revendications 11 ou 12 ; caractérisé en ce que le premier élément optique rotateur de polarisation ($B_1$) est choisi parmi les éléments optiques suivants : cellule de POCKELS, cellule à cristaux liquides ou cellule ferroélectrique.

**14.** Dispositif selon les revendications 11 ou 12 ; caractérisé en ce que le second élément optique rotateur de polarisation ($F_1$) est une cellule de POCKELS à signal de commande électrique ($V_2$) dont l'amplitude détermine l'amplitude dudit angle de rotation de polarisation ($\delta_i$) commandable.

**15.** Dispositif selon les revendications 11 ou 12 ; caractérisé en ce que l'élément optique retardateur ($E_1$) comprend au moins une fibre optique formant une ligne à retard déterminé ($T_0$).

**16.** Dispositif selon la revendication 15, caractérisé en ce que l'élément optique retardateur comprend plusieurs fibres optiques commutables ($E_{11}$ à $E_{1N}$) de manière à former une ligne à retard ajustable, ce retard prenant des valeurs discrètes.

**17.** Dispositif selon la revendication 16 ; caractérisé en ce que les retards apportés par les fibres optiques ($E_{11}$ à $E_{1N}$) sont répartis selon une échelle de puissance de deux dudit retard déterminé ($T_0$)

FIG.1

FIG.2

FIG.6

EP 0 552 093 A1

FIG.3

FIG.4

LASER

$I_e$

$A_1$

A

$M_1$

$V_2$

$V_1$

$F_1$

$B_1$

$P_2$

$C_1$

$P_1$

$D_1$

$M_2$

Configuration $I_0$

$D_2$

$E_1$

Polarisation verticale

Polarisation horizontale

FIG. 5

Office européen
des brevets

**RAPPORT DE RECHERCHE EUROPEENNE**

Numero de la demande

EP    93 40 0061

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN<br>vol. 13, no. 460 (P-946)18 Octobre 1989<br>& JP-A-01 179 910 ( NEC CORP )<br>* abrégé *<br>--- | 1,2,5,8,<br>11,13,14 | H01S3/00<br>G02F1/00 |
| A | PATENT ABSTRACTS OF JAPAN<br>vol. 5, no. 176 (E-81)12 Novembre 1981<br>& JP-A-56 103 548 ( TOKYO SHIBAURA DENK KK<br>)<br>* abrégé *<br>--- | 11,15,16 | |
| A | FR-A-2 253 296 (COMPAGNIE GENERALE<br>D'ELECTRICITE)<br>* page 2, ligne 3 - page 8, ligne 26;<br>figures 1-3 *<br>--- | 1,8,11 | |
| A | US-A-3 447 856 (DE LANGE)<br><br>* colonne 2, ligne 11 - colonne 4, ligne<br>52; figures 1-6 *<br><br>----- | 1,2,8,<br>11,15 | |

| | DOMAINES TECHNIQUES RECHERCHES (Int. Cl.5 ) |
|---|---|
| | H01S |

Le présent rapport a été établi pour toutes les revendications

| Lieu de la recherche | Date d'achèvement de la recherche | Examinateur |
|---|---|---|
| LA HAYE | 08 AVRIL 1993 | CLAESSEN L.M. |